# EUROPÄISCHE PATENTSCHRIFT

(11) **EP 1 656 271 B1**
(45) Veröffentlichungstag und Bekanntmachung des Hinweises auf die Patenterteilung: **09.01.2008**
(21) Anmeldenummer: 04763782.2
(22) Anmeldetag: 04.08.2004
(51) Int. Cl.: B60H 1/34

(54) **LUFTAUSSTRÖMER, INSBESONDERE FÜR EIN KRAFTFAHRZEUG**
AIR VENT, ESPECIALLY FOR A MOTOR VEHICLE
SYSTEME D'ECHAPPEMENT D'AIR, NOTAMMENT POUR UNE AUTOMOBILE

(30) Priorität: 11.08.2003 DE 10337135; 13.05.2004 DE 102004024064
(43) Veröffentlichungstag der Anmeldung: 17.05.2006
(73) Patentinhaber: Behr GmbH & Co. KG, 70469 Stuttgart (DE)
(72) Erfinder: KLINGLER, Dietrich, 73540 Heubach (DE); VOIGT, Klaus, 74321 Bietigheim-Bissigen (DE); BURR, Reinhold, 89522 Heidenheim (DE)
(74) Vertreter: Mantel, Berthold Friedrich
(86) Internationale Anmeldenummer: PCT/EP2004/008732
(87) Internationale Veröffentlichungsnummer: WO 2005/016673

(56) Entgegenhaltungen:
- EP-A- 0 936 091
- EP-A- 1 332 899
- WO-A-02/072371
- DE-A- 2 702 334
- DE-U- 9 214 638
- FR-A- 2 799 695
- US-A- 3 832 939
- US-A- 4 938 033

## Beschreibung

Die Erfindung betrifft einen Luftausströmer, insbesondere für ein Kraftfahrzeug, gemäß dem Oberbegriff des Anspruchs 1 und wie offenbart in FR 2799695. Des Weiteren betrifft die Erfindung ein Verfahren zur Steuerung der Luftausströmung eines Luftausströmers.

Aus der DE 699 01 356 T2 ist ein Luftausströmer zur Zwangsbelüftung von Räumen, wie Fahrgasträumen in Straßen- oder Schienenfahrzeugen, bekannt, der eine oder mehrere Blaseinheiten umfasst, welche im zu belüftenden Raum je nach dessen Größe verteilt sein können. Eine Blaseinheit besteht hierbei aus einem Lüftersatz und Blaseinrichtungen, wie z.B. Düsen, wobei die Anlage dadurch gekennzeichnet ist, dass an die Lüftersätze jeweils ein Gebläsesatz angeschlossen ist, der eine zentrale Blaseinrichtung und mindestens zwei periphere Blaseinrichtungen aufweist, die rund um die zentrale Blaseinrichtung verteilt sind, wobei die Blaseinrichtungen ein rohrförmiges Gehäuse und eine Blasführung aufweisen, die in dem Gehäuse untergebracht ist, und mindestens drei Luftstrahlleitrampen umfassen, die sich jeweils vor und nach den Blaseinrichtungen zunächst in einer radialen Ebene, dann spiralförmig entlang eines geradlinigen Teils einer annähernd zentralen Achse der Blaseinrichtung erstrecken. Dabei ergibt die Spiralform einen breiteren Strahl und sorgt für eine größere Verteilung des Stromes. Ein derartiger Luftausströmer ist jedoch für eine gezielte Belüftung, beispielsweise in Verbindung mit einer Mehrzonen-Klimaanlage eines Kraftfahrzeugs, ungeeignet.

Es ist Aufgabe der Erfindung, einen verbesserten Luftausströmer zur Verfügung zu stellen.

Diese Aufgabe wird gelöst durch einen Luftausströmer mit den Merkmalen des Anspruchs 1. Vorteilhafte Ausgestaltungen sind Gegenstand der Unter ansprüche.

Erfindungsgemäß ist ein Luftausströmer mit einem Luft zuführenden Luftkanal und einer Luftleitvorrichtung vorgesehen, bei dem der Luftkanal in der Luftleitvorrichtung in mindestens zwei im Wesentlichen zylinderförmige Teilkanäle geteilt ist, und die zylinderförmigen Teilkanäle parallel zueinander verlaufen und anschließend eine Vorrichtung zur Einstellung des Luftstromes angeordnet ist.

Bevorzugt erfolgt eine Aufteilung in vier Luftströme, wobei mindestens zwei Teilkanäle parallel zueinander verlaufen. Dabei ist vorzugsweise im äußeren Teilkanal eine wendelartige Führung vorgesehen, welche durch eine entsprechend angeordnete Wand gebildet werden kann, so dass der äußere Luftstrom einen Drall erhält. Vorzugsweise verringert sich die Ganghöhe der Wendel zur Austrittsöffnung hin, so dass die Strömungsgeschwindigkeit der Luft erhöht wird. Bevorzugt sind dabei zwei Führungen in einem Teilkanal vorgesehen.

Vorzugsweise ist die Dosiervorrichtung derart ausgebildet, dass die Luftströme der einzelnen Teilkanäle steuerbar sind, insbesondere unabhängig voneinander. Vorzugsweise steuert die Dosiervorrichtung sowohl die Verteilung der anströmenden Luft auf die einzelnen Teilkanäle als auch deren jeweilige Dosierung. Dies ermöglicht eine feine Dosierung. Vorzugsweise ist hierbei als Dosiervorrichtung eine Stellvorrichtung vorgesehen, die eine mittels einer oder mehrerer Kurvenscheiben gesteuerte Doppelklappe aufweist. Dies ermöglicht eine direkte Handverstellung mittels eines Drehknopfes durch den Insassen, so dass kein Stellmotor, keine Übersetzung o.ä. erforderlich ist.

Bevorzugt sind um jeden zylinderförmigen Teilkanal mindestens und vorzugsweise genau zwei wendelförmige Teilkanäle angeordnet, die unabhängig voneinander über getrennte Steuervorrichtungen regelbar sind. Dies ermöglicht eine erhebliche Verkürzung der Baulänge bei im Wesentlichen gleichem Ergebnis.

Bevorzugt ist im Einströmbereich der den zylinderförmigen Teilkanälen zugeordnete Luftkanal zwischen den beiden, den wendelförmigen Teilkanälen zugeordneten Luftkanälen, angeordnet. Dies ermöglicht durch eine Optimierung der Anströmung der Teilkanäle eine weitere Verkürzung der Baulänge..

Die zylinderförmigen Teilkanäle können über die wendelförmigen Teilkanäle in Luftströmungsrichtung gesehen hinausragen, wodurch sich der Aufbau bei unwesentlich schlechterer Drallausbildung erheblich vereinfacht. In Folge des vereinfachten Aufbaus lassen sich die Herstellungskosten senken.

Der Luftausströmer weist bevorzugt eine Lamellen-Luftleitvorrichtung auf, welche in Luftströmungsrichtung gesehen nach den Teilkanälen angeordnet ist und der Richtungseinstellung, insbesondere des Spotstrahls dient.

Dabei kann zur unabhängigen Einstellung die Lamellen-Luftleitvorrichtung mittig geteilt ausgebildet sein, so dass die beiden Teile unabhängig voneinander regelbar sind, gegebenenfalls auch in ihrer Luftmenge, wodurch sich die Einstellbarkeit verbessert und auf Grund der getrennten Einstellbarkeit für Fahrer und Beifahrer der Komfort erheblich gesteigert werden kann.

Beim Verfahren zur Steuerung der Luftausströmung eines erfindungsgemä-βen Luftausströmers wird eine erste Dosiervorrichtung oder Klappe zumindest eines ersten Luftkanals und eine zweite Dosiervorrichtung oder Klappe zumindest eines zweiten Luftkanals mittels einer Steuereinrichtung wechselseitig geöffnet und geschlossen. Bevorzugt werden mittels des erfindungsgemäßen Verfahrens wechselseitig zumindest ein erster, einem wendelförmigen Teilkanal zugeordneter Luftkanal und zumindest ein zweiter, einem zylindrischen Teilkanal zugeordneter Luftkanal, geschlossen und geöffnet. Dadurch kommt es zu einer wechselseitigen Ausströmung von diffuser Luft und spotförmig ausströmender Luft. Dies wird von einem Fahrzeuginsassen als Luftfächeln wahrgenommen und kann zur Komfortsteigerung, insbesondere bei hohen Fahrzeuginnenraumtemperaturen beitragen.

In einer vorteilhaften Ausgestaltung des Verfahrens verläuft das wechselseitige Öffnen und Schließen in oszillierender Weise. Bevorzugt ist die Oszillationsfrequenz innerhalb eines Einstellbereichs, insbesondere zwischen 0,5 Hz und 10 Hz einstellbar.

Die Einstellung der Oszillationsfrequenz erfolgt in einer weiteren vorteilhaften Variante des erfindungsgemäßen Verfahrens über eine Regelung mittels einem oder mehrerer Regelparameter. Als Regelparameter finden dabei insbesondere die Fahrzeuginnenraumtemperatur und/oder die Differenz aus einer Innenraum-Solltemperatur und einer Innenraum-Isttemperatur und/oder eine Gebläseeinstellung Verwendung. Die Oszillationsfrequenz kann beispielsweise bei einer sehr hohen Innenraumtemperatur, beispielsweise bei Inbetriebnahme des Fahrzeugs nach längerem Stillstand in der Sonne, grö-βer sein und mit dem Abkühlvorgang abnehmen bis zum Erreichen eines Grenzwertes in der umgeschaltet wird auf einen Dauerbetrieb ohne Oszillation. Eine Regelung über eine Gebläseeinstellung ermöglicht es beispielsweise die Oszillationsfrequenz auf unterschiedliche Ausströmgeschwindigkeiten der Luft, infolge unterschiedlich eingestellter Gebläsestärke anzupassen.

Im Folgenden wird die Erfindung anhand von vier Ausführungsbeispielen, teilweise unter Bezugnahme auf die Zeichnung, im Einzelnen erläutert. In der Zeichnung zeigen:

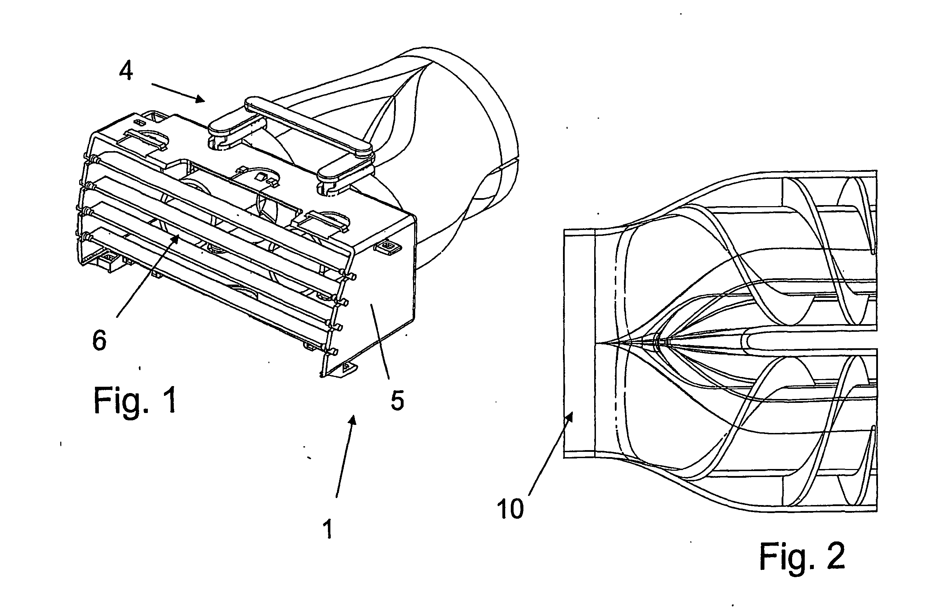

- Fig. 1: eine Ansicht eines Luftausströmers gemäß dem ersten Ausführungsbeispiel,
- Fig. 2: eine Draufsicht auf den zentralen Bereich des Luftausströmers von Fig. 1 mit dargestellten Innenkonturen,
- Fig. 3: eine Ansicht aus einer anderen Perspektive auf den zentralen Bereich des Luftausströmers von Fig. 1,
- Fig. 4: eine Draufsicht auf den inneren Bereich des Luftausströmers von Fig. 1,
- Fig. 5: eine Ansicht aus einer anderen Perspektive auf den inneren Bereich des Luftausströmers von Fig. 1 mit dargestelltem Strömungsverlauf,
- Fig. 6: eine Fig. 2 entsprechende Darstellung,
- Fig. 7: eine perspektivische Darstellung des zentralen Bereichs eines Luftausströmers gemäß dem zweiten Ausführungsbeispiel,
- Fig. 8: eine andere perspektivische Darstellung des Luftausströmers von Fig. 7,
- Fig. 9: eine perspektivische Darstellung der unteren Drallführung,
- Fig. 10: eine andere perspektivische Darstellung der unteren Drallführung,
- Fig. 11: eine perspektivische Darstellung der oberen Drallführung,
- Fig. 12: eine andere perspektivische Darstellung der oberen Drallführung,
- Fig. 13: eine perspektivische Darstellung des Spotteils,
- Fig. 14: eine perspektivische Ansicht eines Luftausströmers gemäß dem dritten Ausführungsbeispiel.

Ein erfindungsgemäßer Luftausströmer 1, wie in den Figuren dargestellt, schließt an einen Luftkanal (nicht dargestellt) an und umfasst eine Dosiervorrichtung (nicht dargestellt). In diesem Zusammenhang wird ausdrücklich auf die DE 102 43 974 A1 verwiesen, deren diesbezügliche Offenbarung ausdrücklich mit eingezogen wird. Die Dosiereinrichtung ist noch im Bereich des Luftkanals angeordnet. Der Luftausströmer 1 umfasst ferner eine Luftleitvorrichtung 4, welche der Dosiervorrichtung nachgeordnet ist, und eine Vorrichtung 5 zur Einstellung der Richtung des Luftstroms, welche im Bereich der Austrittsöffnung 6 angeordnet ist. Diese Vorrichtung 5 wird vorliegend durch ein herkömmliches Lamellengitter mit verstellbaren Lamellen gebildet. Die Austrittsöffnung 6 und somit auch die Vorrichtung 5 zur Einstellung der Richtung des Luftstroms sind im Armaturenbrett (nicht dargestellt) eines Kraftfahrzeugs eingebaut. Somit kann der Insasse direkt die gewünschte Richtung des Luftstroms einstellen.

Die Luftleitvorrichtung 4 ist derart ausgebildet, dass an ihrem Eintrittsbereich 10 eine Aufteilung des Luftkanals in zwei im Wesentlichen gleich große Teilkanäle 11 und 12 erfolgt. Die Teilung erfolgt in radialer Richtung quer zum im Wesentlichen kreisförmigen Querschnitt des Luftkanals. Dabei ist im Anfangsbereich, auch als Eintrittsbereich der Luftleitvorrichtung 4 bezeichnet, keine Richtungsänderung bezüglich der Richtung des Luftkanals vorgesehen.

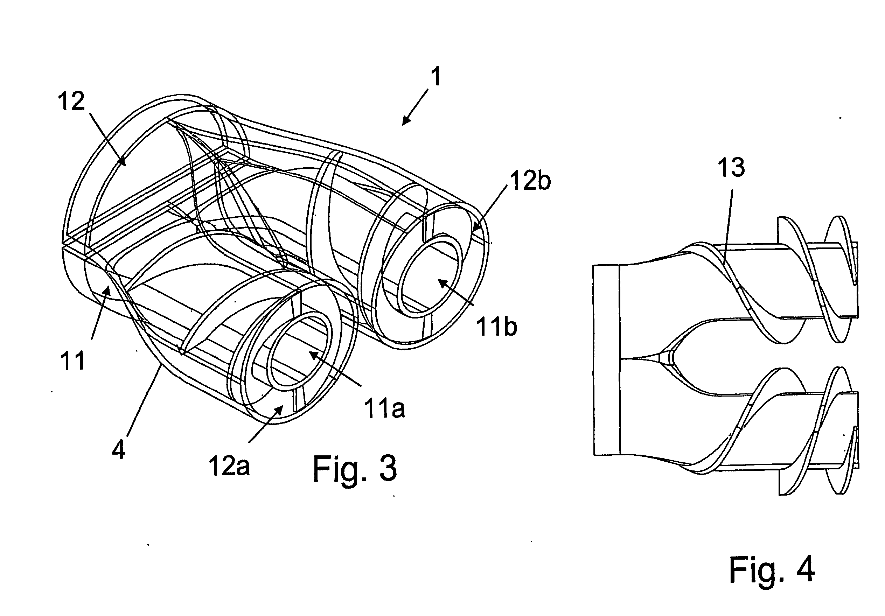

Im Anschluss an den Eintrittsbereich der Luftleitvorrichtung 4 ist eine zweite Aufteilung der beiden Teilkanäle 11 und 12 vorgesehen, wobei diesmal die Aufteilung in senkrecht zur vorigen Aufteilung erfolgt. Dabei gabelt sich der im Eintrittsbereich 10 kreisförmige Querschnitt in zwei dicht nebeneinander parallel verlaufende kreisförmige Querschnitte auf, so dass insgesamt vier Teilkanäle 11a, 11b, 12a und 12b vorgesehen sind. Der vom Teilkanal 11 kommende Telikanal 11a ist hierbei rohrförmig ausgebildet. Der vom Teilkanal 12 kommende Teilkanal 12a hingegen ist hohlzylindrisch ausgebildet und verläuft außerhalb des Teilkanals 11a. Die Flächen der Teilkanäle 11a, 11 b, 12a und 12b entsprechen einander etwa. Die Teilkanäle 11a und 11 b werden im Folgenden auch als innere, die Teilkanäle 12a und 12b als äußere Teilkanäle bezeichnet. Im Teilkanal 12a sind zwei wendelartig ausgebildete Führungen 13 vorgesehen, welche den Teilkanal 12a weiter unterteilen. Dabei verringert sich die Ganghöhe der Wendel zur Austrittsöffnung 6 hin. Die Teilkanäle 11 b und 12b entsprechen den Teilkanälen 11a und 12a, jedoch sind sie achssymmetrisch bezüglich der Ebene der zweiten Aufteilung ausgebildet (siehe Fig. 4).

Auf Grund der wendelartigen Führungen 13 wird die durch die äußeren Teilkanäle 12a, 12b kommende Luft mit einem Drall versehen, während die durch die inneren Teilkanäle 11a und 11 b kommende Luft diese gerade durchläuft und gerade ausströmt.

Gemäß dem vorliegenden Ausführungsbeispiel ist als Dosiervorrichtung eine Stellvorrichtung mit einer Doppelklappe vorgesehen, die parallel zur Teilung des Kanals angeordnet ist und die über zwei miteinander durch eine Welle verbundene Kurvenscheiben derart steuerbar ist, dass jeder Teilkanal 11, 12 einzeln geöffnet und geschlossen werden kann. Die Steuerung erfolgt durch den Insassen über ein am (nicht dargestellten) Armaturenbrett angeordnetes Betätigungsorgan, vorliegend einen Drehknopf, welcher direkt mit der Welle verbunden ist.

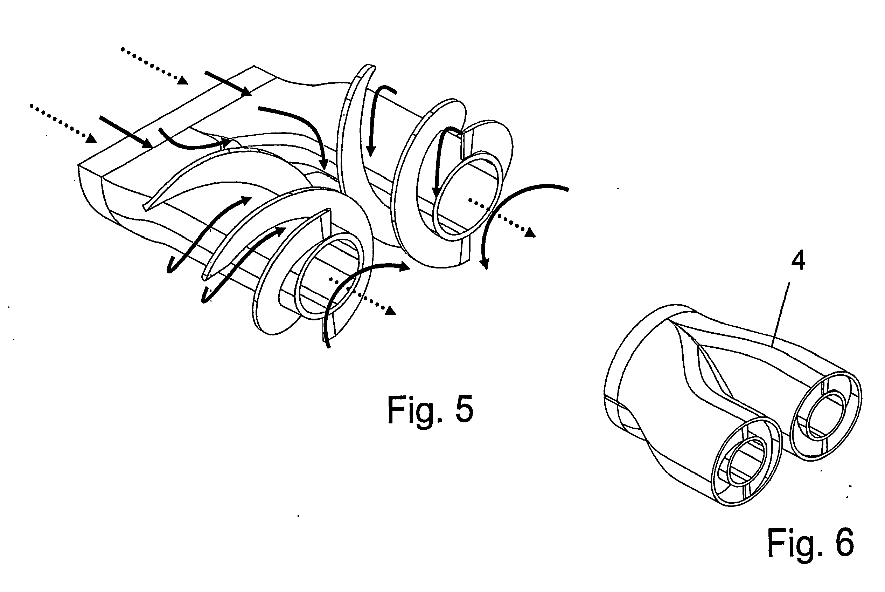

Die Funktion des Luftausströmers 1 ist Folgende: steht die Doppelklappe in einer Stellung, die beide Teilkanäle 11 und 12 freigibt, so gelangt jeweils etwa ein gleich großer Luftstrom in die beiden Teilkanäle 11 und 12 und weiter in die Teilkanäle 11 a, 11 b, 12a und 12b. Die die inneren Teilkanäle 11 a, 11 b durchströmende Luft (in Fig. 5 durch gepunktete Pfeile angedeutet) gelangt auf direktem Wege durch den Luftausströmer 1 und wird in im Wesentlichen gerader Richtung und mit einem ausreichend gleichmäßigen Strömungsprofil bei einer geraden Einstellung des Lamellengitters in den Fahrzeuginnenraum abgegeben. Die die äußeren Teilkanäle 12a und 12b durchströmende Luft (in Fig. 5 durch durchgezogene Pfeile angedeutet) wird durch die wendelartigen Führungen 13 umgelenkt und erhalten dadurch einen Drall, der auch an der Austrittsöffnung 6 noch vorhanden ist und für eine gewisse Verwirbelung der Luft sorgt und die jeweiligen durch die inneren Teilkanäle 11a und 11 b kommenden Luftströme auffächert.

Verschließt der eine Teil der Doppelklappe den Teilkanal 12 und somit die äußeren Teilkanäle 12a und 12b und ist der Teilkanal 11 freigegeben, so gelangt die Luft ausschließlich durch die inneren Teilkanäle 11 a und 11 b zur Austrittsöffnung 6, so dass ein im Wesentlichen drallfreier Luftstrahl an den Fahrzeuginnenraum abgegeben wird (Spotwirkung).

Verschließt hingegen der andere Teil der Doppelklappe den Teilkanal 11 und ist der Teilkanal 12 freigegeben, so gelangt die Luft ausschließlich durch die äußeren Teilkanäle 12a und 12b der Luftleitvorrichtung 4 und erhält dadurch den o.g. Drall, der auch an der Austrittsöffnung 6 noch vorhanden ist und für eine starke Verwirbelung der Luft sorgt (diffuse Einstellung).

Zwischenbereiche können beliebig angesteuert werden, so dass eine feine Dosierung des Luftstromes mit Hilfe des Luftausströmers 1 möglich ist.

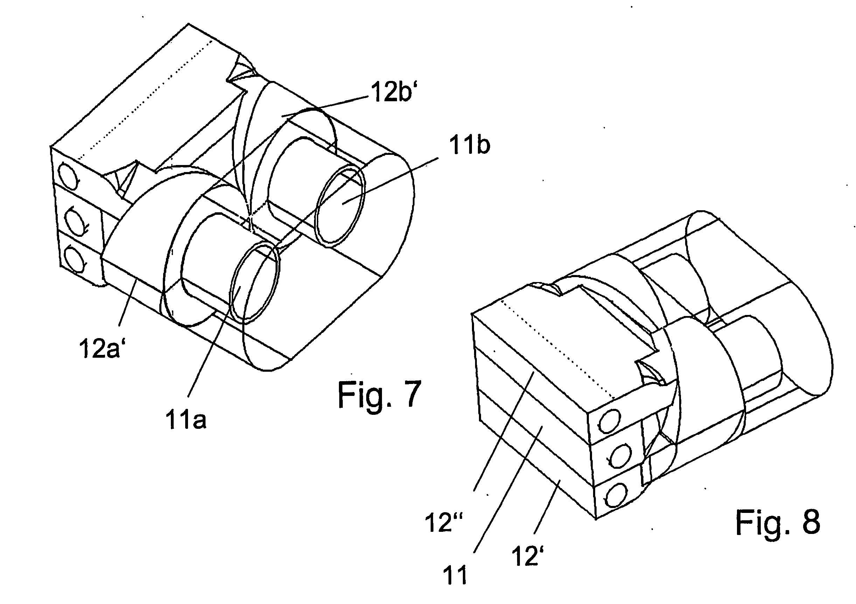

Das zweite Ausführungsbeispiel, welches einen Luftausströmer 1 mit verkürzter Baulänge zeigt, entspricht im Wesentlichen dem ersten Ausführungsbeispiel, jedoch sind um jeden der inneren Teilkanäle 11a und 11 b je zwei getrennt voneinander ausgebildete äußere Teilkanäle 12a', 12a" und 12b', 12b" vorgesehen. Dabei weisen die Teilkanäle 12a' und 12b' sowie die Teilkanäle 12a" und 12b" je einen gemeinsamen Teilkanal 12' und 12" auf, und der Teilkanal 11, welcher sich in die beiden inneren Teilkanäle 11a und 11 b (Spotkanäle) verzweigt, ist zwischen den Teilkanälen 12' und 12" angeordnet, wie insbesondere aus Fig. 8 ersichtlich ist. Auf Grund der Anordnung wird im Folgenden auf den Teilkanal 12' auch als unteren Teilkanal 12' und auf den Teilkanal 12" auch als oberen Teilkanal 12" Bezug genommen.

Die drei Teilkanäle 11, 12' und 12" weisen in ihrem Einlassbereich jeweils einen etwa rechteckförmigen Querschnitt auf, wobei der mittlere Teilkanal 11 etwas größer ausgebildet ist. Dabei sind in diesem Bereich Steuervorrichtungen zur Steuerung der Luftverteilung auf die einzelnen Teilkanäle 11, 12' und 12" in Form von drei Klappen 14 vorgesehen.

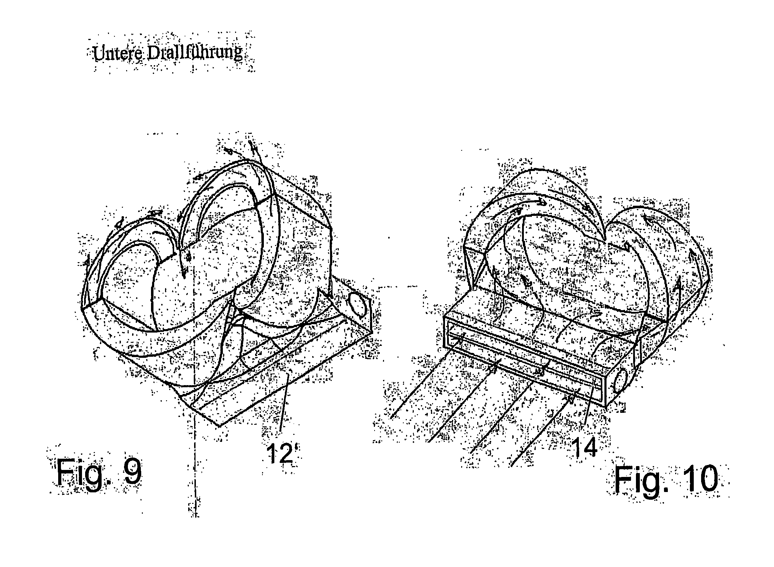

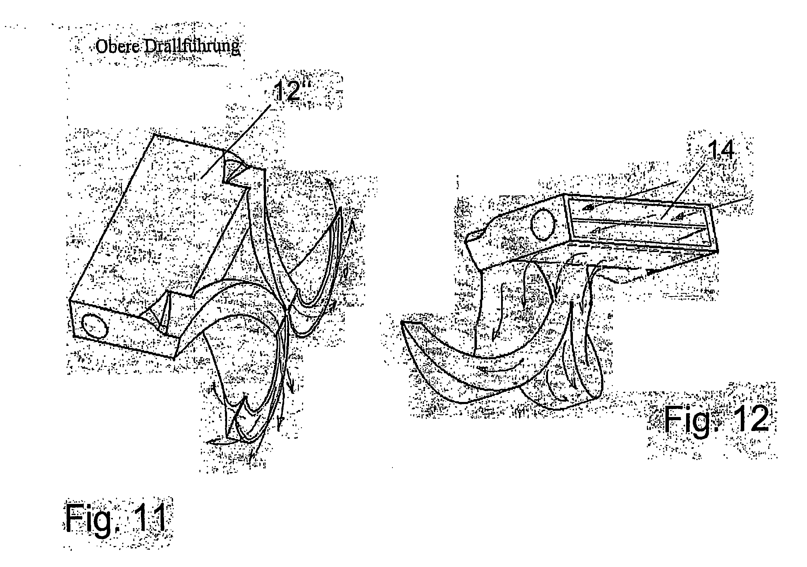

Wie insbesondere aus den Figuren 9 bis 12, in denen der Strömungsverlauf durch Pfeile verdeutlicht ist, ersichtlich ist, kann durch die getrennte Ausbildung und die bezüglich des mittleren Teilkanals 11 seitliche Anordnung der Teilkanäle 12' und 12" sehr schnell eine Umlenkung der Luftströmung in die gewünschte wendelartige Strömungsrichtung erfolgen, so dass die Baulänge nahezu halbiert werden kann.

Ferner ragen die mittlere Teilkanäle 11a und 11 b, wie aus den Figuren 7 und 8 ersichtlich ist, deutlich über die wendelartigen Teilkanäle 12a', 12a", 12b', 12b" hinaus, so dass auf Grund vereinfachter Geometrien die Herstellungskosten gesenkt werden können, ohne dass der Strömungsverlauf wesentlich negativ beeinflusst wird. Dabei enden jedoch die mittleren Teilkanäle 11a und 11 b noch innerhalb des Gehäuses des Luftausströmers 1.

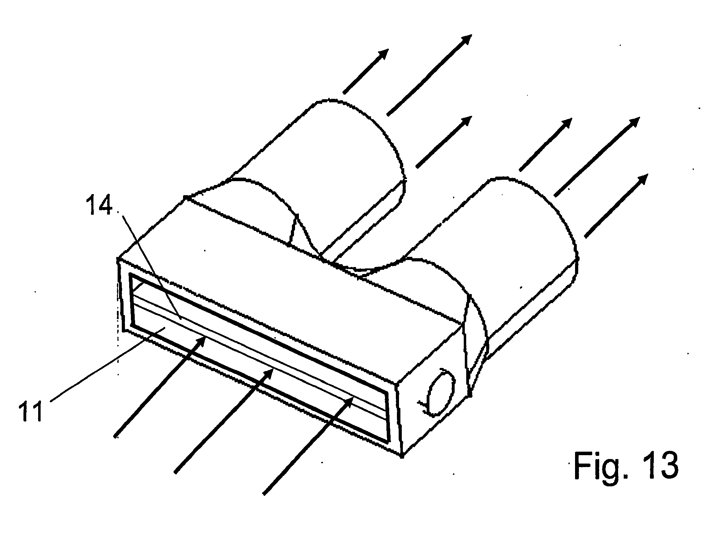

Fig. 13 zeigt den, zu den in den Figuren 9 bis 12 dargestellten wendelförmigen Teilkanälen 12' und 12" gehörigen Spotteil mit dem Teilkanal 11, der ebenfalls mit einer Klappe 14 ausgebildet ist.

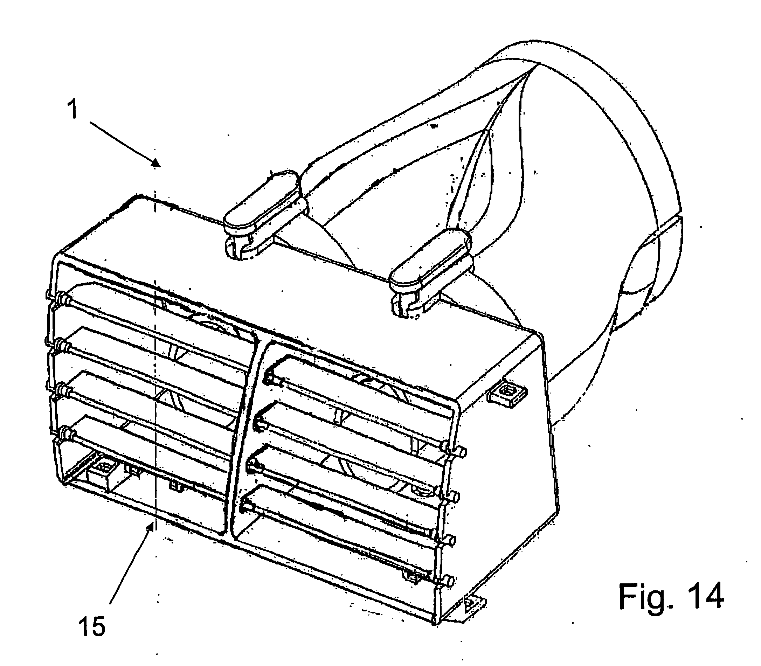

Gemäß dem dritten, in Fig. 14 dargestellten Ausführungsbeispiel ist ein Luftausströmer 1 dargestellt, dessen Aufbau im Wesentlichen dem des zweiten Ausführungsbeispiels entspricht, jedoch kann diese Ausbildung auch auf das erste Ausführungsbeispiel angewandt werden. Hierbei ist am Luftausströmer 1 eine mittig geteilte Lamellen-Luftleitvorrichtung 15 vorgesehen, so dass die von den Teilkanälen 11a, 12a', 12b' ausströmende Luft unabhängig von der von den Teilkanälen 11 b, 12b', 12b" in die vertikale und/oder horizontale Richtung abgelenkt und/oder der Teil des Luftausströmers ganz verschlossen werden kann.

Gemäß einem vierten nicht in der Zeichnung dargestellten Ausführungsbeispiel ist ein Luftausströmer vorgesehen, bei welchem die Teilkanäle 11a, 12a', 12a" unabhängig von den Teilkanälen 11 b, 12b', 12b" mittels einer entsprechend ausgebildeten Steuervorrichtung und entsprechend dem dritten Ausführungsbeispiel mittig geteilt ausgebildeter Lamellen vor dem Luftausströmer 1 regelbar sind.

### Bezugszeichenliste

- 1: Luftausströmer
- 4: Luftleitvorrichtung
- 5: Vorrichtung
- 6: Austrittsöffnung
- 10: Eintrittsbereich
- 11: Teilkanal
- 11a, 11 b: innerer Teilkanal
- 12: Teilkanal
- 12': unterer Teilkanal
- 12": oberer Teilkanal
- 12a, 12b, 12a', 12b', 12a", 12b": äußerer Teilkanal
- 13: Führung
- 14: Klappe
- 15: Lamellen-Luftleitvorrichtung

## Patentansprüche

1. Luftausströmer, insbesondere für ein Kraftfahrzeug, mit einem Luft zuführenden Luftkanal und einer Luftleitvorrichtung (4), wobei der Luftkanal in der Luftleitvorrichtung (4) in mindestens zwei im Wesentlichen zylinderförmige, parallel zueinander angeordnete Teilkanäle (11a, 11 b) geteilt ist, **dadurch gekennzeichnet, dass** um mindestens einen der zylinderförmigen Teilkanäle (11a, 11b) mindestens ein weiterer wendelartiger oder in die Länge gezogener, spiralförmiger Teilkanal (12a, 12b) angeordnet ist.

2. Luftausströmer nach Anspruch 1, **dadurch gekennzeichnet, dass** die Luftleitvorrichtung (4) eine Aufteilung der durch den Luftkanal zugeführten Luft in mindestens vier Luftströme vorsieht.

3. Luftausströmer nach einem der vorhergehenden Ansprüche, **dadurch gekennzeichnet, dass** die Luftleitvorrichtung (4) konzentrisch ineinander angeordnete Teilkanäle (11a und 12a, 11 b und 12b) aufweist.

4. Luftausströmer nach einem der vorhergehenden Ansprüche, **dadurch gekennzeichnet, dass** der wendelartige Teilkanal (12a, 12b) mindestens eine Führung (13) aufweist, welche wendelartig angeordnet ist.

5. Luftausströmer nach einem der vorhergehenden Ansprüche, **dadurch gekennzeichnet, dass** die Ganghöhe der Wendel sich zur Austrittsöffnung (10) hin verringert.

6. Luftausströmer nach einem der vorhergehenden Ansprüche, **dadurch gekennzeichnet, dass** vor der Luftleitvorrichtung (4) eine Dosiervorrichtung angeordnet ist, die derart ausgebildet ist, dass die den einzelnen Teilkanälen (11,12) zuführbare Luft steuerbar ist.

7. Luftausströmer nach einem der vorhergehenden Ansprüche, **dadurch gekennzeichnet, dass** hinter der Luftleitvorrichtung (4) eine Vorrichtung (5) zur Einstellung der Richtung des Luftstroms angeordnet ist.

8. Luftausströmer nach einem der vorhergehenden Ansprüche, **dadurch gekennzeichnet, dass** das Verhältnis eines engsten Querschnitts eines der zylinderförmigen Teilkanäle (11a, 11b) zum engsten Querschnitt des zugehörigen wendelförmigen Teilkanals (12a, 12b) von 1:1,5 bis 1:0,3 variierbar ist.

9. Luftausströmer nach einem der vorhergehenden Ansprüche, **dadurch gekennzeichnet, dass** um jeden zylinderförmigen Teilkanal (11a, 11 b) mindestens zwei wendelförmige Teilkanäle (12a', 12a", 12b', 12b") angeordnet sind, die unabhängig voneinander über getrennte Steuervor richtungen regelbar sind.

10. Luftausströmer nach Anspruch 9, **dadurch gekennzeichnet, dass** um jeden zylinderförmigen Teilkanal (11a, 11 b) je zwei wendelförmige Teilkanäle (12a', 12a", 12b', 12b") angeordnet sind, wobei im Einströmbereich der den zylinderförmigen Teilkanälen (11a, 11b) zugeordnete Luftkanal zwischen den beiden, den wendelförmigen Teilkanälen (12a', 12b' und 12a", 12b") zugeordneten Luftkanälen angeordnet ist.

11. Luftausströmer nach Anspruch 9 oder 10, **dadurch gekennzeichnet, dass** die zylinderförmigen Teilkanäle (11a, 11b) über die wendelförmigen Teilkanäle (12a', 12a", 12b', 12b") in Luftströmungsrichtung gesehen hinausragen.

12. Luftausströmer nach einem der vorhergehenden Ansprüche, **dadurch gekennzeichnet, dass** der Luftausströmer (1) eine Lamellen-Luftleitvorrichtung (15) aufweist.

13. Luftausströmer nach Anspruch 12, **dadurch gekennzeichnet, dass** die Lamellen-Luftleitvorrichtung (15) mittig geteilt ausgebildet ist und beide Teile unabhängig voneinander regelbar sind.

14. Verfahren zur Steuerung der Luftausströmung eines Luftausströmers nach einem der Ansprüche 1 bis 13, **dadurch gekennzeichnet, dass** eine erste Dosiervorrichtung oder Klappe (14) zumindest eines ersten zylindrischen Luftkanals (11) und eine zweite Dosiervorrichtung oder Klappe (14) zumindest eines zweiten wendelartigen oder in die Länge gezogenen, spiralförmigen Luftkanals (12) mittels einer Steuereinrichtung wechselseitig geöffnet und geschlossen werden, wobei eine wechselseitige Ausströmung von diffuser und spotförmiger Luft erfolgt.

15. Verfahren nach Anspruch 14, **dadurch gekennzeichnet, dass** das wechselseitige Öffnen und Schließen oszillierend erfolgt.

16. Verfahren nach Anspruch 15, **dadurch gekennzeichnet, dass** die Oszillationsfrequenz innerhalb eines Einstellbereichs, insbesondere zwischen 0,5 Hz und 10 Hz wählbar ist.

17. Verfahren nach Anspruch 15, **dadurch gekennzeichnet, dass** die Oszillationsfrequenz in Abhängigkeit von einem oder mehreren Regelparametern geregelt wird.

18. Verfahren nach Anspruch 17, **dadurch gekennzeichnet, dass** als Regelparameter die Innenraumtemperatur und/oder die Differenz aus einer Innenraum-Solltemperatur und einer Innenraum-Isttemperatur und/oder eine Gebläseeinstellung Verwendung finden.

19. Belüftungssystem für ein Kraftfahrzeug, **gekennzeichnet durch** einen Luftausströmer (1) gemäß einem der Ansprüche 1 bis 13.

## Claims

1. Air outlet, in particular for a motor vehicle, with an intake air duct and an air conduit device (4), such that in the air conduit device (4) the air duct is divided into at least two essentially cylindrical part-ducts (11a, 11b) arranged parallel to one another, **characterised in that** at least one further helicoidal or elongated spiral part-duct (12a, 12b) is arranged around at least one of the cylindrical part-ducts (11a, 11b).

2. Air outlet according to Claim 1, **characterised in that** the air conduit (4) divides the air coming in through the air duct into at least four air streams.

3. Air outlet according to either of the preceding claims, **characterised in that** the air conduit (4) has part-ducts (11a and 12a, 11b and 12b) arranged concentrically one inside another.

4. Air outlet according to any of the preceding claims, **characterised in that** the helicoidal part-duct (12a, 12b) has at least one guide (13) which is shaped in a helix.

5. Air outlet according to any of the preceding claims, **characterised in that** the pitch height of the helix decreases towards the outlet opening (10).

6. Air outlet according to any of the preceding claims, **characterised in that** upstream from the air conduit (4) is arranged a metering device designed so that the air passing into the individual part-ducts (11, 12) can be controlled.

7. Air outlet according to any of the preceding claims, **characterised in that** a device (5) for adjusting the air flow direction is arranged downstream from the air conduit (4).

8. Air outlet according to any of the preceding claims, **characterised in that** the ratio between a smallest cross-section of one of the cylindrical part-ducts (11a, 11b) and the smallest cross-section of the associated helicoidal part-duct (12a, 12b) can be varied from 1:1.5 to 1:0.3.

9. Air outlet according to any of the preceding claims, **characterised in that** around each cylindrical part-duct (11a, 11b) are arranged at least two helicoidal part-ducts (12a', 12a", 12b', 12b"), which can be regulated independently of one another by separate control devices.

10. Air outlet according to Claim 9, **characterised in that** around each cylindrical part-duct (11a, 11b) are arranged in each case two helicoidal part-ducts (12a', 12a", 12b', 12b"), such that in the inflow area of the air duct, the air duct associated with the cylindrical part-ducts (11a, 11b) is arranged between the two air ducts associated with the helicoidal part-ducts (12a', 12a", 12b', 12b").

11. Air outlet according to Claims 9 or 10, **characterised in that** as viewed in the air-flow direction, the cylindrical part-ducts (11a, 11b) extend beyond the helicoidal part-ducts (12a', 12a", 12b', 12b").

12. Air outlet according to any of the preceding claims, **characterised in that** the air outlet (1) comprises a baffle air conduit device (15).

13. Air outlet according to Claim 12, **characterised in that** the baffle air conduit device (15) is divided in the middle and both parts can be regulated independently of one another.

14. Method for controlling the air that flows from an air outlet according to any of Claims I to 13, **characterised in that** a first metering device or shutter (14) of at least a first cylindrical air duct (11) and a second metering device or shutter (14) of at least a second helicoidal or extended spiral air duct (12) are opened and closed by a control device in alternation, whereby alternate outflows of diffused and focused air take place.

15. Method according to Claim 14, **characterised in that** the alternate opening and closing take place in an oscillating manner.

16. Method according to Claim 15, **characterised in that** the oscillation frequency can be chosen within a range of adjustment, in particular between 0.5 Hz and 10 Hz.

17. Method according to Claim 15, **characterised in that** the oscillation frequency is regulated as a function of one or more control parameters.

18. Method according to Claim 17, **characterised in that** as control parameters, the inside space temperature and/or the difference between a desired inside space temperature and an actual inside space temperature and/or a fan setting are used.

19. Ventilation system for a motor vehicle, **characterised by** an air outlet (1) according to any of Claims 1 to 13.

## Revendications

1. Système d'échappement d'air, en particulier pour un véhicule automobile, comprenant un canal d'air amenant l'air et un dispositif d'acheminement d'air (4), le canal d'air dans le dispositif d'acheminement d'air (4) étant divisé en au moins deux canaux partiels (11a, 11b) sensiblement cylindriques, disposés parallèlement l'un à l'autre, **caractérisé en ce qu'**au moins un autre canal partiel (12a, 12b) hélicoïdal ou en forme de spirale et étiré en longueur est disposé autour d'au moins un des canaux partiels cylindriques (11a, 11b).

2. Système d'échappement d'air selon la revendication 1, **caractérisé en ce que** le dispositif d'acheminement d'air (4) prévoit une répartition de l'air amené à travers le canal d'air en au moins quatre flux d'air.

3. Système d'échappement d'air selon l'une quelconque des revendications précédentes, **caractérisé en ce que** le dispositif d'acheminement d'air (4) comprend des canaux partiels (11a et 12a, 11b et 12b) disposés de manière concentrique les uns dans les autres.

4. Système d'échappement d'air selon l'une quelconque des revendications précédentes, **caractérisé en ce que** le canal partiel hélicoïdal (12a, 12b) comprend au moins une conduite (13), laquelle est disposée de façon hélicoïdale.

5. Système d'échappement d'air selon l'une quelconque des revendications précédentes, **caractérisé en ce que** la hauteur de pas de l'hélice se rétrécit en direction de l'ouverture de sortie (10).

6. Système d'échappement d'air selon l'une quelconque des revendications précédentes, **caractérisé en ce qu'**un dispositif de dosage, qui est conçu de telle sorte que l'air susceptible d'être amené aux canaux partiels (11, 12) individuels peut être commandé, est disposé devant le dispositif d'acheminement d'air (4).

7. Système d'échappement d'air selon l'une quelconque des revendications précédentes, **caractérisé en ce qu'**un dispositif (5) destiné à régler la direction du flux d'air est disposé derrière le dispositif d'acheminement d'air (4).

8. Système d'échappement d'air selon l'une quelconque des revendications précédentes, **caractérisé en ce que** le rapport entre une section la plus étroite d'un des canaux partiels cylindriques (11a, 11b) et la section la plus étroite du canal partiel hélicoïdal (12a, 12b) associé peut varier de 1:1,5 à 1:0,3.

9. Système d'échappement d'air selon l'une quelconque des revendications précédentes, **caractérisé en ce qu'**au moins deux canaux partiels hélicoïdaux (12a', 12a", 12b', 12b"), qui peuvent être régulés indépendamment l'un de l'autre par l'intermédiaire de dispositifs de guidage séparés, sont disposés autour de chaque canal partiel cylindrique (11a, 11b).

10. Système d'échappement d'air selon la revendication 9, **caractérisé en ce que** respectivement deux canaux partiels hélicoïdaux (12a', 12a" , 12b', 12b") sont disposés autour de chaque canal partiel cylindrique (11a, 11b), le canal d'air associé aux canaux partiels cylindriques (11, 11b) étant disposé dans la zone d'afflux entre les deux canaux d'air associés aux canaux partiels hélicoïdaux (12a', 12b' et 12a", 12b").

11. Système d'échappement d'air selon la revendication 9 ou 10, **caractérisé en ce que** les canaux partiels cylindriques (11a, 11b) dépassent des canaux partiels hélicoïdaux (12a', 12a", 12b', 12b") dans la direction du flux d'air.

12. Système d'échappement d'air selon l'une quelconque des revendications précédentes, **caractérisé en ce que** le système d'échappement d'air (1) comprend un dispositif d'acheminement d'air à ailettes (15).

13. Système d'échappement d'air selon la revendication 12, **caractérisé en ce que** le dispositif d'acheminement d'air à ailettes (15) est conçu en étant divisé au centre et les deux parties peuvent être régulées indépendamment l'une de l'autre.

14. Procédé de commande de l'échappement d'air d'un système d'échappement d'air selon l'une quelconque des revendications 1 à 13, **caractérisé en ce qu'**un premier dispositif de dosage ou clapet (14) au moins d'un premier canal d'air cylindrique (11) et un second dispositif de dosage ou clapet (14) au moins d'un second canal d'air hélicoïdal ou étiré en longueur en forme de spirale (12) sont ouverts et fermés en alternance au moyen d'un dispositif de commande, un échappement alterné d'un air diffus et sous forme de spot se produisant.

15. Procédé selon la revendication 14, **caractérisé en ce que** l'ouverture et la fermeture alternées s'effectuent par oscillation.

16. Procédé selon la revendication 15, **caractérisé en ce que** la fréquence d'oscillation peut être sélectionnée à l'intérieur d'une plage de réglage en particulier entre 0,5 Hz et 10 Hz.

17. Procédé selon la revendication 15, **caractérisé en ce que** la fréquence d'oscillation est réglée en fonction d'un ou de plusieurs paramètre(s) de régulation.

18. Procédé selon la revendication 17, **caractérisé en ce que** la température ambiante et/ou la différence entre une température ambiante théorique et une température ambiante effective et/ou un réglage du ventilateur sont utilisés comme paramètres de régulation.

19. Système d'aération pour un véhicule automobile, **caractérisé par** un système d'échappement d'air (1) selon l'une quelconque des revendications 1 à 13.
